# DEMANDE DE BREVET EUROPEEN

(11) **EP 1 562 353 A2**
(43) Date de publication de la demande: **10.08.2005**
(21) Numéro de dépôt: 05290006.5
(22) Date de dépôt: 04.01.2005
(51) Int. Cl.: H04M 1/02, H04N 7/14, G06F 1/16, E05D 3/06

(54) **Téléphone pliable avec une caméra dans la charnière**

(30) Priorité: 06.01.2004 FR 0400045
(71) Demandeur: Sagem SA, 75015 Paris (FR)
(72) Inventeur: Romao, Fernando, 78360 Montesson (FR)
(74) Mandataire: Lavialle, Bruno

(57) **Abrégé**

Téléphone mobile comportant une première partie (1) et une deuxième partie (2) ayant chacune une face avant (4, 5), une face arrière (6, 7) et une extrémité de liaison (8, 9) reliée à un organe d'articulation (3) agencé pour que les parties soient mobiles entre une position fermée dans laquelle les faces avant sont adjacentes et une position ouverte dans laquelle les faces avant sont écartées, le téléphone comprenant un afficheur (12) débouchant sur la face avant de la première partie et une caméra (14) reliée à l'afficheur et solidaire de l'extrémité de liaison de la deuxième partie pour s'étendre en saillie de la face avant de la première partie dans une ouverture (11) de l'extrémité de liaison de la première partie au moins lorsque les parties sont fermées, l'organe d'articulation comprenant deux axes de rotation (16, 17) parallèles rattachés respectivement à la première partie et à la deuxième partie de telle manière qu'en position ouverte les faces arrière soient adjacentes.

## Description

Il existe des téléphones mobiles comportant une première partie et une deuxième partie ayant chacune une face avant, une face arrière et une extrémité de liaison reliée à un organe d'articulation agencé pour que les parties soient mobiles entre une position fermée dans laquelle les faces avant sont adjacentes et une position ouverte dans laquelle les faces avant sont écartées. Le téléphone comprend un afficheur débouchant sur la face avant de la première partie et une caméra reliée à l'afficheur et débouchant sur la face avant de la deuxième partie.

La caméra, généralement constituée d'un objectif fixe ou d'un zoom derrière lequel est disposé un capteur, est utilisée pour faire des photographies ou des films de l'environnement de l'utilisateur ou pour filmer l'utilisateur lui-même lorsque le téléphone est utilisé comme visiophone, l'afficheur permettant alors à l'utilisateur de visualiser son interlocuteur.

Lors de la prise de vues par l'utilisateur d'une scène de son environnement, il est nécessaire que l'utilisateur puisse visualiser le champ couvert par la caméra.

Il est ainsi connu d'associer sur la face arrière de l'une des parties du téléphone un afficheur additionnel permettant à l'utilisateur de cadrer la scène. L'afficheur additionnel complexifie la structure du téléphone et augmente son encombrement et son poids.

Il est également connu d'utiliser une caméra montée pour pivoter sur le téléphone et permettant à l'utilisateur d'orienter la caméra soit vers lui pour une utilisation du téléphone comme visiophone, soit vers son environnement pour la prise de vue classique, l'afficheur du téléphone mobile étant alors utilisé pour cadrer la scène. Toutefois, la caméra pivotante présente les mêmes inconvénients que l'afficheur additionnel.

Par ailleurs, ces problèmes d'encombrement sont d'autant plus gênants que les zooms utilisés dans ces caméras présentent eux-mêmes un encombrement de plus en plus important qui contribue à l'augmentation de l'encombrement des téléphones mobiles.

### OBJET DE L'INVENTION

Un but de l'invention est de proposer un téléphone mobile intégrant une caméra tout en conservant une structure simple et un encombrement réduit.

### BREVE DESCRIPTION DE L'INVENTION

A cette fin, on prévoit, selon l'invention, un téléphone mobile comportant une première partie et une deuxième partie ayant chacune une face avant, une face arrière et une extrémité de liaison reliée à un organe d'articulation agencé pour que les parties soient mobiles entre une position fermée dans laquelle les faces avant sont adjacentes et une position ouverte dans laquelle les faces avant sont écartées, le téléphone comprenant un afficheur débouchant sur la face avant de la première partie et une caméra reliée à l'afficheur et solidaire de l'extrémité de liaison de la deuxième partie pour s'étendre en saillie de la face avant de la première partie dans une ouverture de l'extrémité de liaison de la première partie lorsque les parties sont fermées, l'organe d'articulation comprenant deux axes de rotation parallèles rattachés respectivement à la première partie et à la deuxième partie de telle manière qu'en position ouverte les faces arrière soient adjacentes.

Ainsi, la caméra est disposée dans la partie du téléphone présentant la plus forte épaisseur de sorte que la caméra peut avoir un encombrement relativement important sans affecter l'encombrement du téléphone. En outre, en position ouverte, l'afficheur peut être utilisé par l'utilisateur pour cadrer des scènes de son environnement tandis que dans une position intermédiaire et en mode visiophone, l'afficheur permet à l'utilisateur de voir son interlocuteur.

D'autres caractéristiques et avantages de l'invention ressortiront à la lecture de la description qui suit de modes de réalisation particuliers non limitatifs de l'invention.

### BREVE DESCRIPTION DES DESSINS

Il sera fait référence aux dessins annexés, parmi lesquels :
- la figure 1 est une vue en perspective d'un téléphone mobile conforme à l'invention, en position fermée,
- la figure 2 est une vue en coupe, selon le plan II de la figure 1, de ce téléphone mobile,
- la figure 3 est une vue analogue à celle de la figure 1 du téléphone mobile dans un position intermédiaire,
- la figure 4 est une vue en élévation de ce téléphone mobile,
- la figure 5 est une vue analogue à celle de la figure 1 du téléphone mobile en position ouverte,
- la figure 6 est une vue en élévation de ce téléphone mobile,
- la figure 7 est une vue de derrière du téléphone mobile en position fermée,
- la figure 8 est une vue de derrière d'un téléphone mobile conforme à une variante de réalisation de l'invention,
- la figure 9 est une vue de dessus de ce téléphone mobile.

### DESCRIPTION DETAILLEE DE L'INVENTION

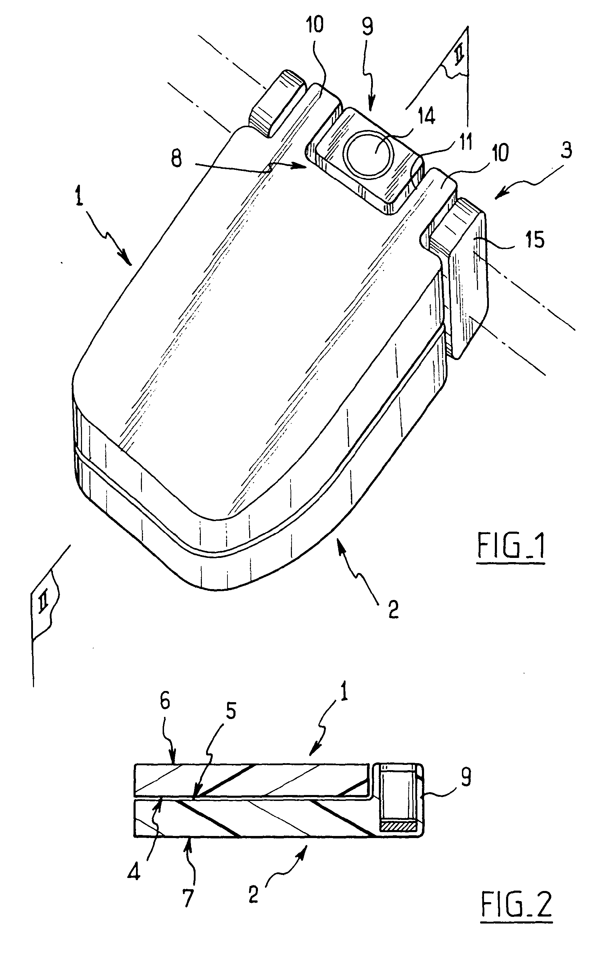

En référence aux figures 1 à 7, le téléphone mobile conforme à l'invention comprend deux parties généralement désignées en 1 et 2, reliées par un organe d'articulation généralement désigné en 3.

Les parties 1, 2 comportent respectivement une face avant 4, 5, une face arrière 6, 7 et une extrémité de liaison 8, 9 à l'organe d'articulation 3.

L'extrémité de liaison 8 de la partie 1 comprend deux pattes 10 parallèles définissant entre elles une ouverture 11.

La partie 1 comprend un afficheur 12 débouchant sur la face avant 4. L'afficheur 12 est par exemple un écran à cristaux liquides.

La partie 2 comprend un clavier 13 et une caméra 14 débouchant sur la face avant 5. Le clavier 13 et la caméra 14 sont connus en eux-mêmes. La caméra 14 est fixée dans l'extrémité de liaison 9 et s'étend en saillie de la face avant 5.

L'organe d'articulation 3 comprend deux biellettes 15 ayant chacune une extrémité raccordée à une des pattes 10 de l'extrémité de liaison 8 de la partie 1 par un axe 16 et une extrémité opposée raccordée à l'extrémité de liaison 9 de la partie 2 par un axe 17. Les pattes 10 ont des côtés externes séparés d'une distance égale à la distance séparant les côtés externes de l'extrémité de liaison 9 et inférieure à la largeur des parties 1 et 2 ; et les biellettes 15 s'étendent à l'extérieur des pattes 10 et de l'extrémité de liaison 9.

Les axes 16 et 17 sont parallèles et permettent aux parties 1 et 2 de pivoter entre deux positions extrêmes.

Dans une première position extrême ou position fermée (voir les figures 1 et 2), les faces avant 4 et 5 sont adjacentes. La caméra 14 est alors reçue dans l'ouverture 11 de la partie 1. Ainsi, la longueur de la caméra est limitée sensiblement par la somme des épaisseurs des parties 1 et 2.

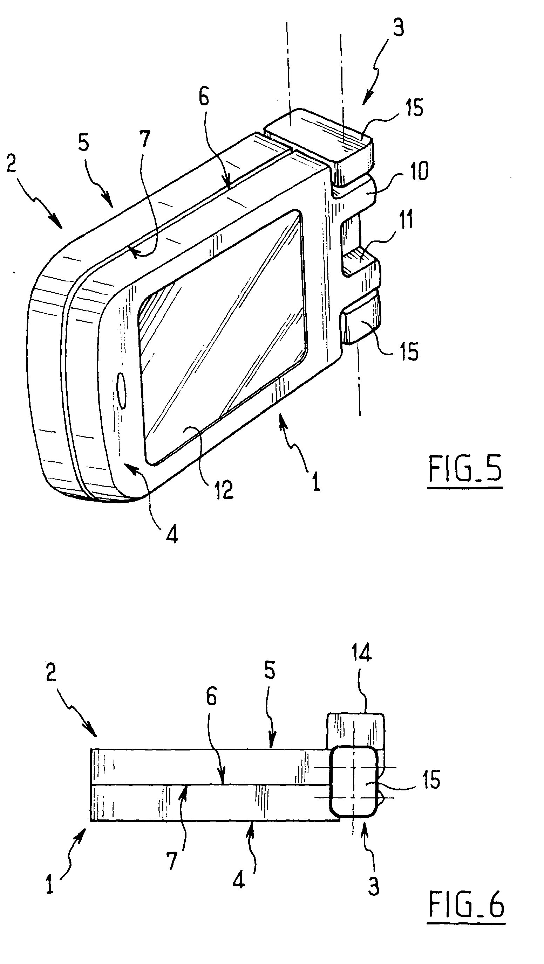

Dans une deuxième position extrême ou position ouverte (représentée aux figures 5 et 6), les faces arrière 6 et 7 des parties 1 et 2 sont en contact l'une avec l'autre. Dans cette position, l'afficheur 12 est orienté à l'opposé de la caméra 14 de telle sorte que l'utilisateur peut effectuer des prises de vues de scènes de son environnement.

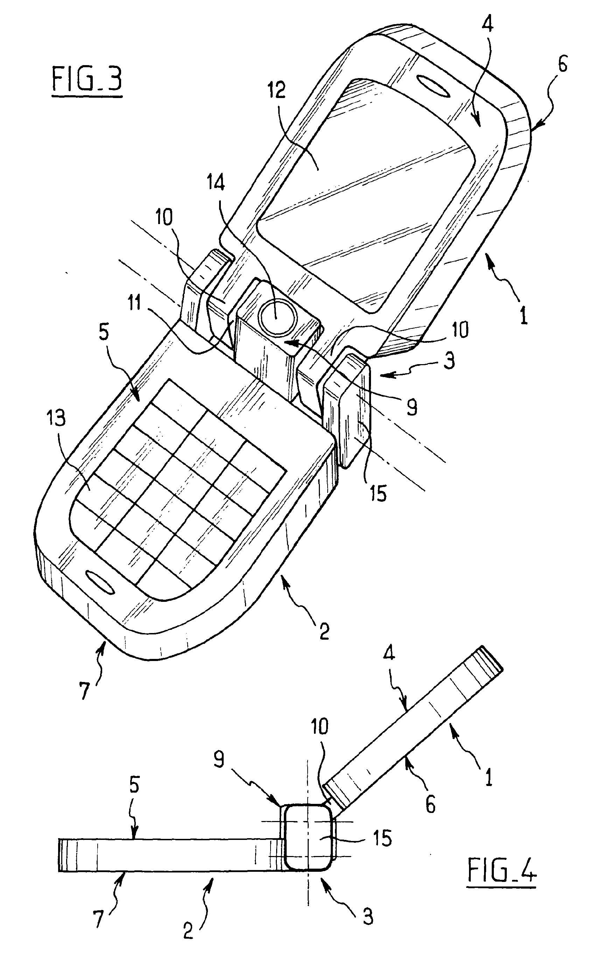

Dans une position intermédiaire (voir les figures 3 et 4), les faces avant 4, 5 des parties 1 et 2 forment entre elles un angle obtus. Dans cette position, l'utilisateur peut utiliser le téléphone mobile de l'invention comme un visiophone par exemple en posant la partie 2 sur une table de telle manière que l'afficheur 12 s'étende sensiblement en face de lui. Le visage de l'utilisateur est alors filmé par la caméra 14, par exemple en position grand-angle si elle est équipée d'un zoom, tandis que l'utilisateur peut voir sur l'afficheur 12 le visage de son interlocuteur.

Pour assurer le maintien du téléphone dans ses différentes positions, un système de came, connu en lui-même et non représenté, est prévu. Un tel système comprend une came solidaire d'un des éléments articulés et contre laquelle est appliqué élastiquement un doigt solidaire de l'autre élément articulé. La came comprend des renfoncements pour recevoir le doigt lorsque les éléments articulés sont dans des positions correspondant aux positions ci-dessus. On peut également prévoir une position stable tous les 25°.

On notera que l'électronique interne du téléphone mobile est classique et n'a donc pas été décrite. Cette électronique peut intégrer un programme permettant, lors du passage de la position intermédiaire à la position ouverte ou inversement, une inversion de l'image affichée par rapport à un axe médian de l'afficheur 12 parallèle aux axes d'articulation 16, 17.

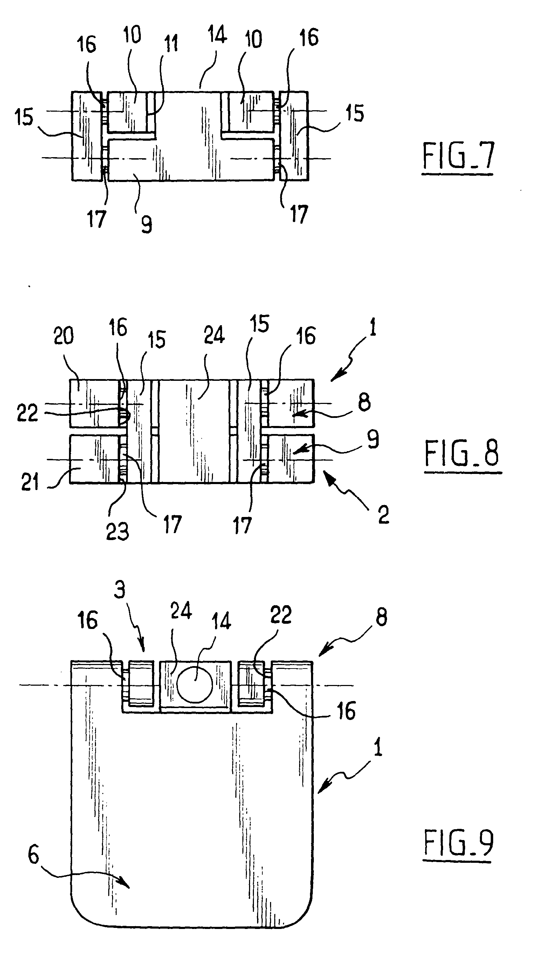

Dans la variante de réalisation représentée aux figures 8 et 9, les parties 1 et 2 ont des extrémités de liaison 18, 19 légèrement différentes de celles décrites précédemment.

L'extrémité de liaison 18 de la partie 1 et l'extrémité de liaison 19 de la partie 2 possèdent deux pattes 20, 21 adjacentes aux bords externes des parties 1 et 2.

Les pattes 20, 21 définissent entre elles des ouvertures 22, 23 respectivement.

L'extrémité de liaison 19 comprend une portion 24 s'étendant dans l'ouverture 23 et recevant la caméra 14. La portion 24 délimite avec les pattes 21 des encoches 25.

L'organe de liaison 3 comprend comme précédemment deux biellettes 15 ayant des extrémités reliés aux pattes 20, 21 par des axes 16, 17.

Les biellettes 15 s'étendent dans cette variante à l'intérieur des pattes 20, 21. Les extrémités des biellettes 15 reliées aux pattes 21 sont reçues dans les encoches 25. Les extrémités des biellettes 15 reliées aux pattes 20 sont reçues dans l'ouverture 22.

En position fermée, la portion 24 et la caméra 14 s'étendent en saillie de la face avant 5 dans l'ouverture 22.

Bien entendu, l'invention n'est pas limitée au mode de réalisation décrit et on peut y apporter des variantes de réalisation sans sortir du cadre de l'invention tel que défini par les revendications.

En particulier, l'organe d'articulation 3 peut avoir une structure différente de celle décrite et comprendre par exemple une seule biellette.

## Revendications

1. Téléphone mobile comportant une première partie (1) et une deuxième partie (2) ayant chacune une face avant (4, 5), une face arrière (6, 7) et une extrémité de liaison (8, 9) reliée à un organe d'articulation (3) agencé pour que les parties soient mobiles entre une position fermée dans laquelle les faces avant sont adjacentes et une position ouverte dans laquelle les faces avant sont écartées, le téléphone comprenant un afficheur (12) débouchant sur la face avant de la première partie et une caméra (14) reliée à l'afficheur et débouchant sur la face avant de la deuxième partie, **caractérisé en ce que** la caméra est solidaire de l'extrémité de liaison de la deuxième partie et s'étend en saillie de la première partie dans une ouverture (11) de l'extrémité de liaison de la première partie au moins lorsque les parties sont fermées, et **en ce que** l'organe d'articulation comprend deux axes de rotation (16, 17) parallèles rattachés respectivement à la première partie et à la deuxième partie de telle manière qu'en position ouverte les faces arrière soient adjacentes.

2. Téléphone mobile selon la revendication 1, **caractérisé en ce que** l'organe d'articulation (3) comprend deux biellettes (15) parallèles et espacées ayant des extrémités reliées aux extrémités de liaison (8, 9) de la première partie (1) et de la deuxième partie (2) par les axes d'articulation (16, 17).

3. Téléphone mobile selon la revendication 2, **caractérisé en ce que** les biellettes (12) s'étendent à l'extérieur des extrémités de liaison (8, 9).

4. Téléphone mobile selon la revendication 2, **caractérisé en ce que** les biellettes (12) s'étendent à l'intérieur des extrémités de liaison (8, 9).
